# EUROPÄISCHE PATENTANMELDUNG

(11) **EP 3 623 890 A1**
(43) Veröffentlichungstag der Anmeldung: **18.03.2020**
(21) Anmeldenummer: 18020450.5
(22) Anmeldetag: 17.09.2018
(51) Int. Cl.: G05B 23/02, G06Q 10/00

(54) **VERFAHREN ZUM ÜBERWACHEN VON MEHREREN VERFAHRENSTECHNISCHEN ANLAGEN**

(71) Anmelder: Linde Aktiengesellschaft, 80331 München (DE)
(72) Erfinder: Carstens, Werner, 82049 Pullach (DE); Wallsten, Lars, 82065 Baierbrunn (DE)
(74) Vertreter: Meilinger, Claudia Sabine

(57) **Zusammenfassung**

Die vorliegende Erfindung betrifft ein Verfahren zum Überwachen von mehreren verfahrenstechnischen Anlagen (101, 102, 103), wobei jede Anlage (101, 102, 103) der mehreren verfahrenstechnischen Anlagen jeweils Komponenten (111, 112, 113, 121, 122, 123, 131, 132, 133) verschiedener Komponententypen (110, 120, 130) umfasst, wobei in einer entfernten Recheneinheit (150) für verschiedene Komponententypen (110, 120, 130) der mehreren verfahrenstechnischen Anlagen (101, 102, 103) jeweils ein Abarbeitungsplan hinterlegt ist, in welchen jeweils zu überprüfende Komponenten des jeweiligen Komponententyps (110, 120, 130) der mehreren verfahrenstechnischen Anlagen (101, 102, 103) hinterlegt sind, wobei in vorgegebenen Zeitintervallen mit Hilfe der Abarbeitungspläne eine Überwachung der mehreren verfahrenstechnischen Anlagen (101, 102, 103) durchgeführt wird, indem von den in den einzelnen Abarbeitungsplänen hinterlegten zu überwachenden Komponenten jeweils Daten gesammelt und ausgewertet werden und basierend auf der Auswertung überprüft wird, ob ein Fehlerzustand der jeweiligen zu überwachenden Komponente vorliegt.

## Beschreibung

Die Erfindung betrifft ein Verfahren zum Überwachen von mehreren verfahrenstechnischen Anlagen, die jeweils Komponenten verschiedener Komponententypen umfassen, sowie eine Recheneinheit und ein Computerprogramm zu dessen Durchführung.

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen.

Verfahrenstechnische Anlagen wie beispielsweise Luftzerlegungsanlagen (engl. air separation unit, ASU) weisen eine Vielzahl verschiedener Komponenten auf, wie etwa Motoren, Transformatoren, Schaltanlagen usw. Defekte einzelner Komponenten können zu teils erheblichen Beeinträchtigungen des Betriebs der Anlage und gar zu einem Ausfall der kompletten Anlage selbst führen, was wiederum mit hohen Kosten und Verlusten verbunden sein kann (engl. "cost of downtime", COD). Für einen effektiven Betrieb von Anlagen ist es daher von Bedeutung, Fehler und Verschleißerscheinungen einzelner Anlagenkomponenten frühzeitig zu erkennen, um Schäden und Ausfälle der Anlage zu vermeiden.

### Offenbarung der Erfindung

Vor diesem Hintergrund werden ein Verfahren zum Überwachen von mehreren verfahrenstechnischen Anlagen, insbesondere Luftzerlegungsanlagen, sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Jede der mehreren verfahrenstechnischen Anlagen umfasst jeweils Komponenten verschiedener Komponententypen. In einer entfernten Recheneinheit ist für jeden verschiedenen Komponententyp der mehreren Anlagen jeweils ein Abarbeitungsplan hinterlegt, in welchen jeweils zu überprüfende Komponenten des jeweiligen Komponententyps der mehreren Anlagen hinterlegt sind. In vorgegebenen Zeitintervallen wird mit Hilfe der Abarbeitungspläne automatisch eine Überwachung der mehreren Anlagen durchgeführt, indem von den in den einzelnen Abarbeitungsplänen hinterlegten zu überwachenden Komponenten jeweils Daten gesammelt und ausgewertet werden und basierend auf der Auswertung automatisch überprüft wird, ob ein Fehlerzustand der jeweiligen zu überwachenden Komponente vorliegt.

Der Abarbeitungsplan für einen speziellen Komponententyp ist insbesondere als ein Workflow, ein Workbook, eine Arbeitsmappe bzw. ein Ablaufplan zu verstehen, wobei die einzelnen zu überwachenden Komponenten dieses Typs listen- oder tabellenartig hinterlegt und mit entsprechenden Informationen bzw. Anweisungen versehen sein können, wie diese Komponenten zu überwachen ist bzw. welche Aktion zur Überwachung dieser Komponenten auszuführen sind. Insbesondere wird durch die Abarbeitungspläne eine Möglichkeit zur automatischen Überwachung der Komponenten bereitgestellt, indem konsekutiv die Überwachung gemäß den entsprechenden Informationen bzw. Anweisungen für die einzelnen hinterlegten Komponenten durchgeführt wird.

Zur Überwachung der Anlagen werden die einzelnen Abarbeitungspläne sowie die einzelnen Komponenten innerhalb jedes Abarbeitungsplans zweckmäßigerweise nacheinander abgearbeitet. Somit werden zweckmäßigerweise zunächst sämtliche Komponenten eines speziellen Komponententyps in allen Anlagen überprüft und anschließend sämtliche Komponenten eines weiteren Komponententyps in allen Anlagen, bis alle Abarbeitungspläne abgearbeitet wurden und bis somit sämtliche zu überwachenden Komponenten in sämtlichen Anlagen überprüft wurden. Diese Überprüfung sämtlicher Komponenten wird nach dem vorgegebenen Zeitintervall wiederholt. Dabei kann das vorgegebene Zeitintervall zweckmäßig derart gewählt werden, um eine effektive, kontinuierliche Überwachung zu ermöglichen und um mögliche Defekte von Komponenten präzise und frühzeitig erkennen zu können. Beispielsweise kann das vorgegebene Zeitintervall 24 Stunden betragen, so dass täglich eine Überprüfung durchgeführt wird.

Insbesondere wird im Zuge der Auswertung jeweils überprüft, ob die gesammelten Daten von Daten abweichen, die für einen regulären, fehlerfreien Betrieb der Komponente typisch sind. Als Fehlerzustand sei in diesem Zusammenhang insbesondere zu verstehen, dass ein Defekt der jeweiligen Komponente vorliegt bzw. vorliegen könnte oder sich zumindest andeutet. Somit kann zweckmäßigerweise ein Defekt oder zumindest ein sich andeutender Defekt frühzeitig erkannt werden und es können frühzeitig Maßnahmen unternommen werden, um diesem Defekt entgegenzuwirken, so dass es nicht zu größeren Schäden der Komponente oder der gesamten Anlage kommt. Insbesondere können somit ein Defekt und Stillstand der kompletten Anlage sowie damit verbundene Kosten und Verlusteinbußen verhindert bzw. möglichst gering gehalten werden.

Durch die Erfindung wird eine einheitliche, zentrale, automatisierte Überwachung einer Vielzahl von Anlagen ermöglicht, insbesondere mit nur einer entfernten Recheneinheit bzw. mit nur einem auf dieser entfernten Recheneinheit ablaufenden Programm. Insbesondere ist eine Vielzahl von Anlagen, die weltweit verteilt sein können, jeweils mit der entfernten Recheneinheit verbunden, beispielsweise über das Internet. Zweckmäßigerweise ist die entfernte Recheneinheit als ein Server oder eine sog. Cloud ausgebildet und kann beispielsweise eine zentrale Recheneinheit zur Koordination bzw. Verwaltung der einzelnen Anlagen sein. Insbesondere sind von jeder dieser Vielzahl von Anlagen jeweils spezielle Komponenten in den entsprechenden Abarbeitungsplänen hinterlegt, welche einer regelmäßigen Überprüfung unterzogen werden sollen.

Ferner wird es durch die Erfindung insbesondere ermöglicht, mit einem einheitlichen Programm, welches auf der entfernten Recheneinheit ausgeführt wird, verschiedene Komponententypen gleichermaßen zu überwachen. Insbesondere sind die Abarbeitungspläne für verschiedene Komponententypen jeweils auf analoge Weise ausgebildet. Beispielsweise können die einzelnen Abarbeitungspläne Teile eines derartigen übergeordneten Programms sein. Es werden somit zweckmäßigerweise nicht für verschiedene Komponententypen verschiedene Überwachungsprogramme bzw. Überwachungssysteme benötigt.

Auf herkömmliche Weise bedarf es zumeist zur Überwachung verschiedener Komponententypen einer Anlage jeweils individuelle Einzelprogramme. Derartige herkömmliche individuelle Überwachungsprogramme für Komponenten eines speziellen Komponententyps werden oftmals von dem Hersteller des jeweiligen Komponententyps oder beispielsweise von externen Expertenfirmen erstellt. Zumeist sind derartige herkömmliche individuelle Überwachungsprogramme verschiedener Komponententypen nicht kompatibel miteinander und unterscheiden sich teils erheblich voneinander, insbesondere in Sachen Handhabung und Benutzeroberfläche. Mitarbeiter einer Anlage müssen daher zumeist in der Handhabung unterschiedlicher Überwachungsprogramme zeit- und kostenintensiv geschult werden, um eine Überwachung der verschiedenen Komponententypen der Anlage mit diesen Überwachungsprogrammen durchführen zu können. Ferner ist es herkömmlicherweise zumeist notwendig, zur Überwachung einer speziellen Anlage die jeweiligen Überwachungsprogramme lokal in der jeweiligen Anlage lokal zu installieren. Mit diesen lokal installierten Versionen der jeweiligen Überwachungsprogramme kann zumeist lediglich diese spezielle Anlage überwacht werden. Eine Überwachung verschiedener, insbesondere lokal voneinander getrennter und gegebenenfalls weltweit verstreuter Anlagen mit einer einzigen installierten Version des Überwachungsprogramms ist zumeist nicht möglich.

Wie obig erläutert können im Gegensatz dazu durch die vorliegende Erfindung Komponenten unterschiedlicher Typen in einer Vielzahl verschiedener, gegebenenfalls weltweit verteilter Anlagen mit einem einheitlichen Überwachungsprogramm überwacht werden, welches in einer einzigen entfernten Recheneinheit installiert ist und insbesondere von jeder der Anlagen aus erreichbar ist. Die Überwachung der unterschiedlichen Komponententypen erfolgt zweckmäßigerweise mit Hilfe der Abarbeitungspläne mit insbesondere analoger, einheitlicher Benutzeroberfläche, Handhabung, Alarm- bzw. Fehlerzustandsanzeige usw. Ein einfaches, effektives und intuitives Handling wird ermöglicht und es können schnelle und aufwandsarme Schulungsmöglichkeit angeboten werden. Die Abarbeitungspläne können beispielsweise in ein für die Mitarbeiter der Anlagen bekanntes und vertrautes System eingebettet werden. Ferner können durch eine Anbindung der entfernten Recheneinheit an das Internet eine zentrale Bedienbarkeit von überall auf der Welt ermöglicht sowie ein zentraler weltweiter Service bereitgestellt werden. Insbesondere wird ein einfacher, modularer Aufbau des Überwachungssystems in der entfernten Recheneinheit ermöglicht, der jeder Zeit einfach durch weitere Softwaremodule erweitert werden kann. Weiterentwicklungen können insbesondere unproblematisch und während des laufenden Betriebs in der entfernten Recheneinheit getestet und implementiert werden.

Vorteilhafterweise wird in den vorgegebenen Zeitintervallen die Überwachung der mehreren Anlagen mit Hilfe eines in der entfernten Recheneinheit hinterlegten Zeitplaners durchgeführt. Dieser Zeitplaner ist insbesondere als ein Scheduler bzw. Scheduler-Programm zu verstehen, welches zu vorgegebenen Zeiten vorgegebene Aktionen autonom durchführen kann. Zweckmäßigerweise startet bzw. startet der Zeitplaner nach Ablauf des vorgegebenen Zeitintervalls autonom die Überwachung mit Hilfe der Abarbeitungspläne. Insbesondere liest der Zeitplaner zu diesem Zweck die verschiedenen Abarbeitungspläne nacheinander ein und arbeitet diese konsekutiv nacheinander ab.

Beispielsweise liest der Zeitplaner zunächst einen ersten der Abarbeitungspläne ein und überprüft sämtliche in diesem Abarbeitungsplan hinterlegten Komponenten des jeweiligen Komponententyps in den verschiedenen Anlagen. Anschließend wird dieser Ablauf für den nächsten der Abarbeitungspläne wiederholt.

Bevorzugt werden im Zuge der Überwachung die Daten der jeweiligen zu überwachenden Komponente gesammelt, indem aktuelle Daten der jeweiligen Komponente eingelesen werden. Aktuelle Daten können insbesondere aktuelle Betriebsdaten der jeweiligen Komponente sein, beispielsweise aktuelle Sensormesswerte, Ansteuerwerte usw. Insbesondere kann die entfernte Recheneinheit die entsprechenden Daten anfordern, woraufhin die Daten an die entfernte Recheneinheit übermittelt werden. Die aktuellen Daten können beispielsweise von der jeweiligen Komponente selbst übermittelt werden oder auch von einer übergeordneten Komponente, z.B. einem übergeordneten Steuergerät.

Alternativ oder zusätzlich werden die Daten der jeweiligen zu überwachenden Komponente im Zuge der Überwachung bevorzugt gesammelt, indem manuell eingegebene Daten betreffend die jeweilige Komponente eingelesen werden. Beispielsweise kann zu diesem Zweck ein Mitarbeiter die entsprechenden Daten in vorgegebenen Zeitintervallen manuell in der entfernten Recheneinheit eingeben. Zweckmäßigerweise kann diese manuelle Eingabe von einem Mitarbeiter in der entsprechenden Anlage durchgeführt werden, welche mit der entfernten Recheneinheit über das Internet verbunden ist.

Um den Aufwand für derartige manuelle Eingaben gering zu halten, kann das vorgegebene Zeitintervall zum Einlesen derartiger manuell eingegebener Daten einen vergleichsweise hohen Wert besitzen, insbesondere im Vergleich zu dem vorgegebenen Zeitintervall für das Einlesen der aktuellen Daten. Beispielsweise kann das Einlesen aktueller Daten in vorgegebenen Intervallen von 24 Stunden durchgeführt werden, so dass zweckmäßigerweise einmal täglich aktuelle Daten zur Überwachung gesammelt werden, wohingegen das vorgegebene Intervall zum Einlesen manuell eingegebener Daten vier Wochen betragen kann, so dass nur einmal im Monat eine manuelle Eingabe nötig ist.

Zum Sammeln der Daten kann in der entfernten Recheneinheit bzw. in dem jeweiligen Abarbeitungsplan insbesondere ein entsprechendes Modul vorgesehen sein, insbesondere ein Softwaremodul (sog. Dateneingabemodul, engl. "Input Data Sheet").

Vorzugsweise werden im Zuge der Überwachung die gesammelten Daten der jeweiligen zu überwachenden Komponente ausgewertet, indem die gesammelten Daten mit zu früheren Zeitpunkten gesammelten Daten der jeweiligen Komponente verglichen bzw. korreliert werden. Insbesondere sind diese zu früheren Zeitpunkten gesammelten Daten in einem Datenspeicher hinterlegt, welcher Teil der entfernten Recheneinheit sein oder direkt mit dieser verbunden sein kann. Beispielsweise können die zu früheren Zeitpunkten gesammelten Daten auch von einem speziellen Programm zur Datensammlung bzw. Datenarchivierung ("Historian") gesammelt worden sein. Zweckmäßigerweise werden die aktuellen Daten ebenfalls in diesem Datenspeicher gespeichert und stehen somit zu einem Vergleich mit zukünftigen Daten zur Verfügung.

Beispielsweise können in einem derartigen Programm zur Datenarchivierung ("Historian") auch Daten gesammelt bzw. hinterlegt sein, welche von externen Quellen stammen, beispielsweise von externen Expertenfirmen. So ist es beispielsweise denkbar, bestimmte Komponenten der Anlage von einer externen Expertenfirma überwachen zu lassen. Daten bzw. Überwachungsergebnisse, welche von dieser Expertenfirma im Zuge dieser Überwachung bestimmte werden, können zweckmäßigerweise in das Programm zur Datenarchivierung übertragen werden und ebenfalls für die Überwachung im Rahmen des vorliegenden Verfahrens zur Verfügung stehen.

Alternativ oder zusätzlich werden die gesammelten Daten vorzugsweise mit Herstellerdaten der jeweiligen Komponente verglichen bzw. korreliert. Insbesondere kann es sich bei den Herstellerdaten um Vergleichsdaten eines fehlerfreien Betriebs der jeweiligen Komponente handeln, wie sie von einem Hersteller der Komponente etwa in einem Planungs-, Herstellungs- bzw. Testprozess der Komponente messtechnisch erfasst oder auch theoretisch modelliert wurden. Zweckmäßigerweise sind diese Herstellerdaten ebenfalls in dem Datenspeicher hinterlegt.

Alternativ oder zusätzlich werden die gesammelten Daten vorzugsweise mit einem oder mehreren vorgegebenen Schwellwerten verglichen. Diese Schwellwerte können insbesondere zulässige Grenzwerte darstellen, deren Erreichen auf einen Fehlerzustand der Komponente hindeutet. Insbesondere können mehrere Schwellwerte vorgesehen sein, welche jeweils auf verschieden Fehlerzustände hindeuten. Ein erster Schwellwert bzw. Fehlerzustand kann beispielsweise auf einen potentiellen, sich gegebenenfalls andeutenden Defekt hindeuten. Ein weiterer Schwellwert kann z.B. auf einen sich tatsächlich andeutenden Defekt hindeuten. Ein weiterer Schwellwert kann beispielsweise auf einen unmittelbar bevorstehenden Defekt hindeuten.

Alternativ oder zusätzlich wird im Zuge der Auswertung der gesammelten Daten vorzugsweise eine Vorhersage über eine Weiterentwicklung der der gesammelten Daten durchgeführt. Insbesondere wird somit vorhergesagt, abgeschätzt bzw. extrapoliert, wie sich die Daten in der Zukunft weiterentwickeln werden bzw. könnten. Beispielsweise kann diese Vorhersage mit Hilfe eines theoretischen Modells durchgeführt werden, etwa mittels einer Simulation der jeweiligen Komponente oder der ganzen Anlage oder insbesondere mittels eines statistischen Modells zur Datenauswertung. Ferner kann im Zug der Auswertung überprüft werden, ob sich die Daten tatsächlich derart weiterentwickelt haben, wie es zu einem früheren Zeitpunkt vorhergesagt wurde. Ergebnisse dieser Überprüfung können dann für die aktuelle Vorhersage oder für zukünftige Vorhersagen berücksichtigt werden. Insbesondere kann in diesem Fall als Fehlerzustand bestimmt werden, dass die vorhergesagte Entwicklung der Daten darauf hin deutet, dass es in der Zukunft zu einem Defekt der Komponente kommen könnte.

Zweckmäßigerweise ist zum Überwachen der Daten in der entfernten Recheneinheit bzw. in dem jeweiligen Abarbeitungsplan ein entsprechendes Modul oder Softwaremodul vorgesehen (sog. Berechnungsmodul, engl. "Calculation Sheet").

Vorteilhafterweise wird eine Visualisierung der gesammelten und/oder ausgewerteten Daten durchgeführt. Diese Visualisierung kann zweckmäßigerweise in der entfernten Recheneinheit erstellt werden und über das Internet an die jeweilige Anlage übermittelt werden (sog. "web report picture"). Beispielsweise können die Daten als Graphen dargestellt werden, um einen langfristigen zeitlichen Verlauf bzw. Trend der Daten visuell darzustellen. Ferner können in einer derartigen Visualisierung die obig erläuterten Schwellwerte dargestellt werden, um beurteilen zu können, ob sich die Komponenten einem etwaigen Fehlerzustand nähert (sog. "Alarm-Trend-Fenster").

Eine besonders bevorzugte Visualisierung kann in Form einer Ampeldarstellung durchgeführt werden, wobei beispielsweise mit einem grünen Licht dargestellt werden kann, dass kein Fehlerzustand vorliegt bzw. dass die Daten keinen Schwellwert erreichen. Mit einem gelben Licht kann beispielsweise dargestellt werden, dass ein erster Fehlerzustand vorliegt und dass die Daten insbesondere einen ersten Schwellwert erreichen. Dieses gelbe Licht kann beispielsweise als eine Warnung über einen sich andeutenden Defekt ausgegeben werden. Mit einem roten Licht kann beispielsweise dargestellt werden, dass ein zweiter Fehlerzustand eingetreten ist und dass die Daten beispielsweise einen zweiten Schwellwert erreichen. Mit diesem roten Licht kann insbesondere vor einem bevorstehenden Defekt gewarnt werden.

Zweckmäßigerweise ist ferner ein Modul bzw. Softwaremodul für diese Visualisierung in der entfernten Recheneinheit bzw. dem jeweiligen Abarbeitungsplan vorgesehen (sog. Ausgabemodul, engl. "Output Sheet"). Insbesondere können die Ergebnisse der Überwachung bzw. diese Visualisierungen der ausgewerteten Daten ebenfalls in dem Datenspeicher hinterlegt werden.

Bevorzugt wird, wenn basierend auf der Auswertung bewertet wird, dass ein Fehlerzustand der jeweiligen zu überwachenden Komponente vorliegt, eine Benachrichtigung an einen zuständigen Verantwortlichen ausgegeben. Beispielsweise kann diese Benachrichtigung über das Internet erfolgen, besonders bevorzugt mit Hilfe eines automatischen E-Mail Benachrichtigungssystems ("E-Mail Notification System"). Auch ein automatischer Anruf an einem Diensttelefon des Verantwortlichen etwa mit einer voraufgenommenen Sprachnachricht ist denkbar.

Alternativ oder zusätzlich wird bevorzugt eine Visualisierung des Fehlerzustands durchgeführt wird, wenn basierend auf der Auswertung bewertet wird, dass ein Fehlerzustand der jeweiligen zu überwachenden Komponente vorliegt. Wie obig erläutert, kann es sich bei dieser Visualisierung besonders bevorzugt um ein gelbes oder rotes Licht einer Ampeldarstellung handeln. Es versteht sich, dass auch andere Visualisierungen in vorteilhafterweise denkbar sind, beispielsweise eine Ausgabe einer Fehlermeldung oder das Aktivieren einer Warnleuchte oder Alarmsirene.

Vorzugsweise umfassen die einzelnen Abarbeitungspläne jeweils ein Verzeichnis mit Informationen der einzelnen zu überwachenden Komponenten des jeweiligen Komponententyps. Zu diesem Zweck können die Abarbeitungspläne jeweils insbesondere als Workbooks bzw. Arbeitsmappen ausgebildet sein oder zweckmäßigerweise auch als Textdokumente. Die Informationen umfassen zweckmäßigerweise einen Namen der jeweiligen Komponente, z.B. einen Produktnamen oder auch einen intern in der jeweiligen Anlage für diese spezielle Komponente verwendeten Namen. Alternativ oder zusätzlich umfassen die Informationen vorzugsweise eine Identifikation der jeweiligen Komponente, z.B. eine Identifikationsnummer (ID), mittels welcher die spezielle Komponente eindeutig identifiziert werden kann. Ferner können die Informationen vorteilhafterweise ein Modell der jeweiligen Komponente umfassen, beispielsweise einen speziellen Bautyp, eine spezielle Modellbaureihe oder auch ein spezielles Produktionsdatum. Die Informationen können alternativ oder zusätzlich bevorzugt einen Standort der jeweiligen Komponente umfassen. Dabei kann es sich beispielsweise einen globalen Standort handeln, also beispielsweise in welcher Stadt sich die Komponente befindet, oder auch um einen lokalen Standort, etwa in welchem Stockwerk oder welchem Zimmer eines Gebäudes sich die Komponente befindet.

Ebenso ist es denkbar, dass die Informationen alternativ oder zusätzlich eine globale und/oder lokale Bezeichnung der jeweiligen Komponente umfassen. Eine globale Bezeichnung kann dabei beispielsweise als eine anlagenübergreifende Bezeichnung für diese spezielle Komponente oder diesen speziellen Komponententyp sein, welche für verschiedene Anlagen gleichermaßen verwendet wird. Eine lokale Bezeichnung kann hingegen beispielsweise eine Bezeichnung sein, die intern in der jeweiligen Anlage für diese spezielle Komponente bzw. diesen speziellen Komponententyp verwendet wird.

Zweckmäßigerweise können die Informationen somit die Komponente selbst betreffen und diese eindeutig identifizieren, charakterisieren bzw. beschreiben. Alternativ oder zusätzlich können die Informationen auch die jeweilige Anlage identifizieren, charakterisieren bzw. beschreiben, in welcher die jeweilige Komponente angeordnet ist. Analog zu obigen Erläuterungen können die Informationen zu diesem Zweck vorzugsweise einen Namen und/oder eine Identifikation und/oder ein Modell und/oder einen Standort und/oder eine globale Bezeichnung und/oder lokale Bezeichnung der Anlage umfassen, in welcher die jeweilige Komponente angeordnet ist.

Vorteilhafterweise werden, um den Abarbeitungsplan für einen speziellen Komponententyp herzustellen, in den mehreren Anlagen jeweils spezielle Komponenten dieses speziellen Komponententyps ausgewählt und in dem Abarbeitungsplan hinterlegt. Dabei werden zweckmäßigerweise nicht sämtliche Komponenten desselben Komponententyps einer speziellen Anlage in dem jeweiligen Abarbeitungsplan hinterlegt. Insbesondere können nur spezielle Komponenten ausgewählt werden, die einer regelmäßigen Überwachung unterzogen werden sollen, beispielsweise Komponenten, die für den Betrieb der jeweiligen Anlage kritisch bzw. unabdingbar sind, deren Defekt zu hohen Kosten oder Einbußen führen würde, deren Reparatur oder Ersatz mit hohen Kosten verbunden wäre und/oder die in der Vergangenheit anfällig für Ausfälle, Schäden oder Defekte waren. Beispielsweise können Verantwortliche bzw. technische Experten der einzelnen Anlage darüber entscheiden, welche der Anlagenkomponenten einer regelmäßigen Überwachung zu unterziehen sind und somit in den jeweiligen Abarbeitungsplan einzubinden sind.

Gemäß einer besonders bevorzugten Ausgestaltung umfasst die verfahrenstechnische Anlage wenigstens eine Fluidzerlegungsanlage, insbesondere wenigstens eine Luftzerlegungsanlage. Somit wird besonders bevorzugt eine Möglichkeit bereitgestellt, um eine Vielzahl verschiedener insbesondere weltweit verteilter Fluid- bzw. Luftzerlegungsanlagen zentral, einheitlich und automatisiert zu überwachen, zweckmäßigerweise mittels eines einheitlichen auf der entfernten Recheneinheit ausgeführten Programms. Beispielsweise wird es für einen Hersteller oder Betreiber von Fluid- bzw. Luftzerlegungsanlagen, welcher derartige Anlagen global vertreibt oder betreibt, ermöglicht diese Anlagen zentral von der entsprechenden entfernten Recheneinheit aus automatisiert zu überwachen, etwa von einem zentralen Firmenserver aus, mit welchem die verschiedenen Anlagen vernetzt sind. Beispielsweise ist es ferner denkbar, dass der Hersteller bzw. Betreiber sowohl seine eigenen Anlagen überwacht, als auch Anlagen von Kunden, welchen der Hersteller beispielsweise bestimmte Komponenten ausliefert, die von dem Kunden dann aber selbst in eine entsprechende Anlage verbaut werden.

Vorzugsweise können in der entfernten Recheneinheit Abarbeitungspläne für verschiedene Komponententypen hinterlegt sein, welche in derartigen Fluid- bzw. Luftzerlegungsanlagen verwendet werden, beispielsweise für Wärmetauscher, z.B. Plattenwärmetauscher oder spiralgewickelte Wärmetauscher, für Verdampfer, für kryogene Kolonne usw.

Besonders vorteilhaft sind in der entfernten Recheneinheit jeweils ein Abarbeitungsplan für die Komponententypen Motoren, Transformatoren und Schaltanlagen hinterlegt. Insbesondere sind derartige Komponententypen besonders kritisch für Luft- bzw. Fluidzerlegungsanlagen, wobei ein Defekt zu hohen Kosten und Verlusteinbußen führen kann und deren Überwachung daher von besonderer Bedeutung ist.

Vorzugsweise sind in dem Abarbeitungsplan für Motoren Mittelspannungsmotoren und/oder Luftkompressoren und/oder O₂/N₂-Kompressoren hinterlegt. Bei derartigen Luftkompressoren kann es sich vorzugsweise um Haupt- und/oder Booster- und/oder Recycling-Luftkompressoren handeln.

Bevorzugt sind in dem Abarbeitungsplan für Transformatoren Mittelspannungstransformatoren und/oder Hochspannungstransformatoren und/oder Einspeisungstransformatoren und/oder Transformatoren vor Mittelspannungsmotoren und/oder MV/MV-Transformatoren und/oder MV/LV-Transformatoren hinterlegt. MV/MV-Transformatoren wandeln insbesondere Mittelspannungen (MV) ineinander um, MV/LV-Transformatoren wandeln zweckmäßigerweise Mittelspannungen und Niederspannungen (LV) ineinander um. Einspeisungstransformatoren sind insbesondere zum Einspeisen elektrischer Energie aus einem Stromnetz in die jeweilige Anlage vorgesehen.

Vorzugsweise sind in dem Abarbeitungsplan für Schaltanlagen Niederspannungsschaltanlagen und/oder Mittelspannungsschaltanlagen und/oder Hochspannungsschaltanlagen und/oder Einspeisungsschaltanlagen hinterlegt.

Es versteht sich, dass zweckmäßige noch weitere spezifische Ausgestaltungen von Motoren, Transformatoren und Schaltanlagen in dem Abarbeitungsplan hinterlegt sein können.

Eine erfindungsgemäße Recheneinheit ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, elektrische und optische Datenträger, wie Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch ein System aus Fluidzerlegungsanlagen und einer entfernten Recheneinheit, dazu eingerichtet eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als ein Blockdiagramm.

### Detaillierte Beschreibung der Zeichnung

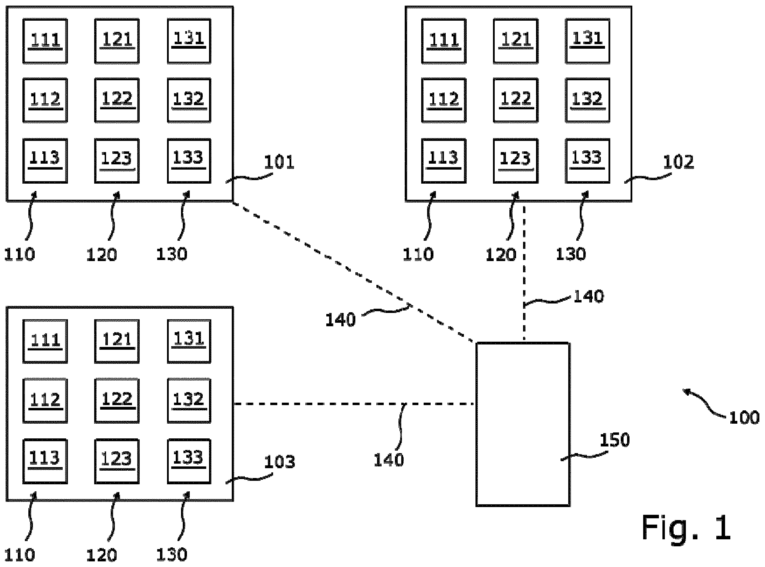

In Figur 1 ist schematisch ein System 100 aus einer Vielzahl von verfahrenstechnischen Anlagen 101, 102, 103 dargestellt. Die verfahrenstechnischen Anlagen 101, 102, 103 sind jeweils beispielsweise als Luftzerlegungsanlage ausgebildet und können jeweils weit voneinander entfernt und insbesondere global verteilt sein.

Jede dieser Anlagen 101, 102, 103 weist jeweils eine Vielzahl verschiedener Komponenten auf. Beispielsweise kann jede dieser Anlagen 101, 102, 103 jeweils Komponenten 111, 112, 113 eines ersten Komponententyps 110 aufweisen. Dieser erste Komponententyp 110 kann beispielsweise Motoren umfassen und die Komponenten 111, 112, 113 können jeweils beispielsweise als Mittelspannungsmotoren, Luftkompressoren oder O₂/N₂-Kompressoren ausgebildet sein.

Ferner umfasst jede Anlage 101, 102, 103 jeweils Komponenten 121, 122, 123 eines zweiten Komponententyps 120, welcher beispielsweise Transformatoren umfassen kann. Die Komponenten 121, 122, 123 können jeweils beispielsweise Mittelspannungstransformatoren, Hochspannungstransformatoren, MV/MV-Transformatoren oder MV/LV-Transformatoren sein.

Beispielsweise umfassen die Anlagen 101, 102, 103 ferner jeweils Komponenten 131, 132, 133 eines dritten Komponententyps 130, beispielsweise Schaltanlagen. Dabei können die Komponenten 131, 132, 133 jeweils z.B. als Mittelspannungsschaltanlagen, Hochspannungsschaltanlagen oder Einspeisungsschaltanlagen ausgebildet sein.

Wenngleich die verschiedenen Anlagen 101, 102, 103 in Figur 1 der Übersichtlichkeit halber baugleich dargestellt sind, versteht sich, dass die verschiedenen Anlagen 101, 102, 103 auch unterschiedlich ausgestaltet sein können und jeweils auch voneinander verschiedene, individuelle Anzahlen einzelner Komponenten und Komponententypen aufweisen können. Ferner versteht sich, dass das System 100 noch weitere Anlagen umfassen kann und dass die Anlagen jeweils auch eines anderen Typs sein können und beispielsweise auch als Fluidzerlegungsanlage, Erdgasanlage, Wasserstoff- und Synthesegasanlage, Adsorptions- und Membrananlage oder kryotechnische Anlage ausgebildet sein können.

Die Anlagen 101, 102, 103 sollen kontinuierlich überwacht werden, um mögliche Defekte einzelner Komponenten frühzeitig erkennen zu können. Zu diesem Zweck sind die Anlagen 101, 102, 103 mit einer entfernten Recheneinheit 150 verbunden, insbesondere über das Internet 140. Beispielsweise kann die entfernte Recheneinheit 150 ein Firmenserver einer Herstellerfirma der verschiedenen Anlagen 101, 102, 103 sein, mittels welchem die Anlagen 101, 102, 103 verwaltet werden.

Ferner ist es beispielsweise denkbar, dass nicht alle Anlagen 101, 102, 103 von demselben Hersteller sind, sondern dass bestimmte Anlagen auch von anderen Herstellern bzw. Betreiber betrieben werden. Beispielsweise können die Anlagen 101 und 102 von demselben Hersteller erbaut und betrieben werden, welcher auch den Firmenserver 150 betreibt. Dieser Hersteller kann beispielsweise bestimmte Komponenten an einen Kunden ausliefern, welcher die Anlage 103 erbaut hat und betreibt. Die Anlage 103 des Kunden kann beispielsweise ebenfalls in die Überwachung der Herstellerfirma der Anlagen 101 und 102 einbezogen werden.

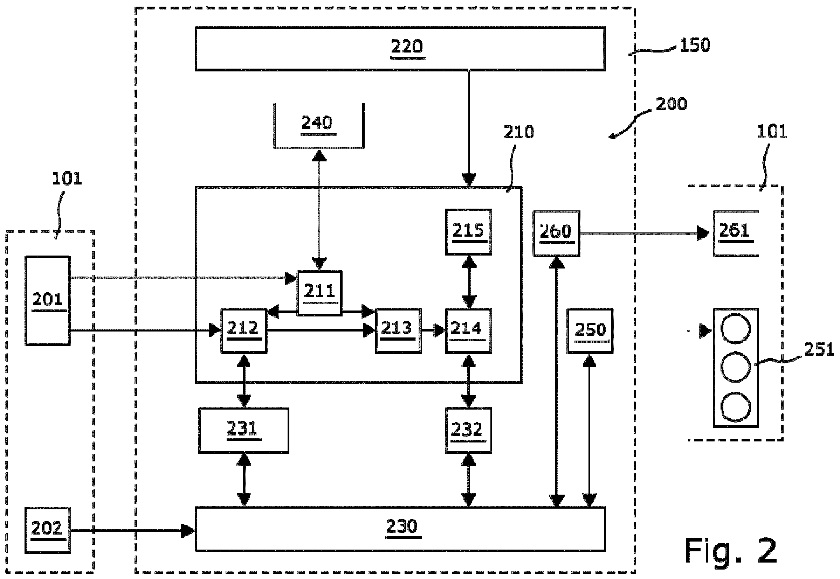

Um eine Überwachung der Anlagen 101, 102, 103 durchzuführen, ist die entfernte Recheneinheit 150, insbesondere programmtechnisch, dazu eingerichtet, eine bevorzugte Ausführungsform eines erfindungsgemäßen Verfahrens durchzuführen, welches in Figur 2 schematisch als ein Blockdiagramm dargestellt ist und nachfolgend in Bezug auf die Figuren 1 und 2 erläutert wird.

Zur Überwachung der Anlagen 101, 102, 103 ist in der entfernten Recheneinheit 150 ein System bzw. Programm 200 implementiert, welches verschiedene Software- und Hardwaremodule aufweisen kann. Dabei ist in der entfernten Recheneinheit für die verschiedenen Komponententypen 110, 120, 130 der Anlagen 101, 102, 103 jeweils ein Abarbeitungsplan hinterlegt. Beispielsweise sind in der entfernten Recheneinheit 150 drei Abarbeitungspläne hinterlegt, ein erster für den Komponententyp 110, also für Motoren, ein zweiter für den Komponententyp 120, also für Transformatoren, und ein dritter für den Komponententyp 130, also für Schaltanlagen. In diesen Abarbeitungsplänen sind jeweils spezielle Komponenten des entsprechenden Typs hinterlegt, welche regelmäßig einer Überwachung unterzogen werden sollen.

In Figur 2 ist schematisch ein derartiger Abarbeitungsplan 210 in der entfernten Recheneinheit 150 dargestellt. Im Folgenden soll beispielhaft der Fall betrachtet werden, dass dieser Abarbeitungsplan 210 für Motoren, also für den ersten Komponententyp 110 vorgesehen ist. Für Transformatoren und Schaltanlagen ist auf analoge Weise ein entsprechender Abarbeitungsplan in der entfernten Recheneinheit 150 implementiert.

Ein Zeitplaner 220 ist vorgesehen, welcher in vorgegebenen Zeitintervallen von beispielsweise 24 Stunden autonom den Abarbeitungsplan 210 startet bzw. durchführt. Der Abarbeitungsplan 210 umfasst verschiedene Module 211 bis 215, mittels welcher die Überwachung der Anlagen 101, 102, 103 durchgeführt wird.

Ein erstes Modul 211 liest aus einem Verzeichnis 240 die dort hinterlegten zu überwachenden Komponenten des Komponententyps 110 ein. Beispielsweise kann in diesem Verzeichnis 240 hinterlegt sein, dass Hauptluftkompressoren 111 aller Anlagen 101, 102, 103 zu überwachen sind.

Ferner können in dem Verzeichnis 240 Herstellerdaten der Hauptluftkompressoren 111 hinterlegt sein, welche insbesondere für einen fehlerfreien Betrieb charakteristisch sind und welche ebenfalls von dem Modul 211 eingelesen werden. Beispielsweise können diese Herstellerdaten Schwellwerte für eine charakteristische Messgröße umfassen. Diese Messgröße kann beispielsweise der Kosinus eines Phasenwinkels (cosφ) eines Motors des Hauptluftkompressors 111 sein.

Für die Überwachung werden nun aktuelle Daten der Hauptluftkompressoren 111 der Anlagen 101, 102, 103 gesammelt. Zu diesem Zweck fordert ein Dateneingabemodul 212 ("Input Data Sheet") die entsprechenden aktuellen Daten von den Anlagen 101, 102, 103 an.

In Figur 2 ist beispielsweise dargestellt, wie ein Steuergerät 201 der Anlage 101 die aktuellen Daten an das Dateneingabemodul 212 übermittelt. Diese Daten können aktuelle erfasste Werte für die obig erläuterte Messgröße cosφ sein.

Alternativ oder zusätzlich ist es auch denkbar, dass die Daten nicht von einem Steuergerät 201 automatisch übermittelt werden, sondern dass ein Mitarbeiter in der Anlage 101 die entsprechenden Daten manuell in die entfernte Recheneinheit 150 eingibt.

Es ist ferner auch denkbar, dass alternativ oder zusätzlich zu den Herstellerdaten aus dem Verzeichnis 240 entsprechende Vergleichsdaten von der Anlage an das Modul 211 übermittelt werden.

Das Dateneingabemodul 212 speichert die empfangenen aktuellen Daten 231 in einem Datenspeicher 230. Ferner liest das Dateneingabemodul 212 in dem Datenspeicher 230 hinterlegte zu früheren Zeitpunkten gesammelte Daten 231 ein.

Diese zu früheren Zeitpunkten gesammelten Daten 231 können beispielsweise von dem Dateneingabemodul 212 im Zuge früherer Überwachungen selbst gesammelt und in dem Speicher 230 hinterlegt worden sein. Ebenso ist es denkbar, dass es sich um Archivdaten handelt, die von einem speziellen Programm 202 zur Datensammlung bzw. Datenarchivierung ("Historian") in der Anlage 101 gesammelt und an den Speicher 230 übertragen wurden. Beispielsweise können in diesem Programm 202 ("Historian") auch Daten von externen Expertenfirmen hinterlegt sein, welche beispielsweise spezielle Komponenten der Anlage 101 überwachen.

Die aktuellen Daten, die Herstellerdaten und die zu früheren Zeitpunkten gesammelten Daten werden nun an ein Berechnungsmodul 213 ("Calculation Sheet") weitergeleitet, welches diese Daten auswertet und überprüft, ob ein Fehlerzustand des jeweiligen Hauptluftkompressors 111 vorliegt.

Insbesondere bestimmt das Berechnungsmodul 213 aus den aktuellen und den zu früheren Zeitpunkten gesammelten Daten einen zeitlichen Verlauf der Messgröße cosφ und vergleicht diesen mit Schwellwerten. Ein erster Schwellwert charakterisiert z.B. einen ersten Fehlerzustand, insbesondere einen sich andeutenden Defekt. Ein zweiter Schwellwert charakterisiert einen zweiten Fehlerzustand, z.B. einen unmittelbar bevorstehenden Defekt.

Alternativ oder zusätzlich ist es denkbar, dass das Berechnungsmodul 213 basierend auf den aktuellen und den zu früheren Zeitpunkten gesammelten Daten eine Vorhersage trifft, wie sich die Daten weiterentwickeln, also insbesondere wie sich der zeitliche Verlauf der Messgröße cosφ weiter entwickeln wird und ob dieser in der Zukunft einen der Schwellwerte erreichen wird.

Ein Ergebnis dieser Auswertung und Überprüfung wird von dem Berechnungsmodul 213 an ein Ausgabemodul 214 ("Output Sheet") übermittelt. Falls die Ergebnisse nicht plausibel sein sollten oder ein Fehler in der Auswertung vorliegt, wird dies von dem Ausgabemodul 214 in einem Fehlerspeicher 215 ("Error Log File") hinterlegt. Wenn die Ergebnisse plausibel sind, speichert das Ausgabemodul 214 diese Ergebnisse 232 in dem Datenspeicher 230 ab. Ferner werden diese Ergebnisse 232 aus dem Datenspeicher 230 von Modulen 250 und 260 eingelesen.

Ein Visualisierungsmodul 250 führt eine Visualisierung dieser Ergebnisse 232 durch und übermittelt diese visualisierten Ergebnisse an die Anlage 101, welche dort z.B. auf einem Überwachungsmonitor dargestellt werden können ("web report picture"). Beispielsweise kann diese Visualisierung eine Ampeldarstellung 251 umfassen. Wenn der zeitliche Verlauf von cosφ dabei keinen der Schwellwerte erreicht, wird ein grünes Licht angezeigt. Erreicht der zeitliche Verlauf den ersten Schwellwert und liegt somit der erste Fehlerzustand vor, wird ein gelbes Licht angezeigt. Wenn der zeitliche Verlauf den zweiten Schwellwert erreicht und der zweite Fehlerzustand vorliegt, wird ein rotes Licht angezeigt. Alternativ oder zusätzlich kann Visualisierung auch eine Darstellung des zeitlichen Verlaufs von cosφ z.B. als Graph umfassen.

Ein Modul 260 zur automatischen E-Mail-Benachrichtigung ("E-Mail Notification System") liest die Ergebnisse 232 aus dem Datenspeicher 230 ebenfalls ein. Wenn der zeitliche Verlauf den zweiten Schwellwert erreicht und somit ein Defekt bevorsteht, wird von dem E-Mail-Benachrichtigungsmodul 260 eine E-Mail-Benachrichtigung 261 an einen zuständigen Verantwortlichen ausgegeben.

Nachdem diese Überprüfung für den Hauptluftkompressor 111 der Anlage 101 durchgeführt wurde, erfolgt eine analoge Überprüfung der Hauptluftkompressoren 111 der übrigen Anlage 102, 103. Anschließend erfolgt gemäß weiteren Abarbeitungsplänen eine Überprüfung der Transformatoren 120 und Schaltanlagen 130.

Somit wird es ermöglicht, eine Vielzahl verschiedener weltweit verteilter Luftzerlegungsanlagen 101, 102, 103 zentral, einheitlich und automatisiert zu überwachen, mittels eines einheitlichen auf der entfernten Recheneinheit 150 ausgeführten Systems 200.

## Patentansprüche

1. Verfahren zum Überwachen von mehreren verfahrenstechnischen Anlagen (101, 102, 103),
wobei jede Anlage (101, 102, 103) der mehreren verfahrenstechnischen Anlagen jeweils Komponenten (111, 112, 113, 121, 122, 123, 131, 132, 133) verschiedener Komponententypen (110, 120, 130) umfasst,
wobei in einer entfernten Recheneinheit (150) für verschiedene Komponententypen (110, 120, 130) der mehreren verfahrenstechnischen Anlagen (101, 102, 103) jeweils ein Abarbeitungsplan (210) hinterlegt ist, in welchen jeweils zu überprüfende Komponenten des jeweiligen Komponententyps (110, 120, 130) der mehreren verfahrenstechnischen Anlagen (101, 102, 103) hinterlegt sind,
wobei in vorgegebenen Zeitintervallen mit Hilfe der Abarbeitungspläne (210) eine Überwachung der mehreren verfahrenstechnischen Anlagen (101, 102, 103) durchgeführt wird, indem von den in den einzelnen Abarbeitungsplänen (210) hinterlegten zu überwachenden Komponenten jeweils Daten gesammelt (212) und ausgewertet (213) werden und basierend auf der Auswertung überprüft (213) wird, ob ein Fehlerzustand der jeweiligen zu überwachenden Komponente vorliegt.

2. Verfahren nach Anspruch 1, wobei in den vorgegebenen Zeitintervallen die Überwachung der mehreren verfahrenstechnischen Anlagen (101, 102, 103) mit Hilfe eines in der entfernten Recheneinheit (150) hinterlegten Zeitplaners (220) durchgeführt wird, indem der Zeitplaner (220) nach Ablauf des vorgegebenen Zeitintervalls autonom die Überwachung mit Hilfe der Abarbeitungspläne (210) durchführt.

3. Verfahren nach Anspruch 1 oder 2, wobei im Zuge der Überwachung die Daten der jeweiligen zu überwachenden Komponente gesammelt werden, indem aktuelle Daten der jeweiligen Komponente eingelesen werden und/oder manuell eingegebene Daten betreffend die jeweilige Komponente eingelesen werden (212).

4. Verfahren nach einem der vorstehenden Ansprüche, wobei im Zuge der Überwachung die gesammelten Daten der jeweiligen zu überwachenden Komponente ausgewertet werden, indem
die gesammelten Daten mit zu früheren Zeitpunkten gesammelten Daten der jeweiligen Komponente verglichen werden und/oder
die gesammelten Daten mit Herstellerdaten der jeweiligen Komponente verglichen werden und/oder
die gesammelten Daten mit einem oder mehreren vorgegebenen Schwellwerten verglichen werden (213) und/oder
eine Vorhersage über eine Weiterentwicklung der gesammelten Daten durchgeführt wird.

5. Verfahren nach einem der vorstehenden Ansprüche, wobei eine Visualisierung der gesammelten und/oder ausgewerteten Daten durchgeführt wird (250, 251).

6. Verfahren nach einem der vorstehenden Ansprüche, wobei, wenn basierend auf der Auswertung bewertet wird, dass ein Fehlerzustand der jeweiligen zu überwachenden Komponente vorliegt, eine Benachrichtigung ausgegeben wird (260, 261) und/oder eine Visualisierung des Fehlerzustands durchgeführt wird (250, 251).

7. Verfahren nach einem der vorstehenden Ansprüche, wobei die einzelnen Abarbeitungspläne (210) jeweils ein Verzeichnis (240) mit Informationen der einzelnen zu überwachenden Komponenten des jeweiligen Komponententyps umfassen, wobei die Informationen umfassen:
einen Namen der jeweiligen Komponente und/oder
eine Identifikation der jeweiligen Komponente und/oder ein Modell der jeweiligen Komponente und/oder
einen Standort der jeweiligen Komponente und/oder
eine globale und/oder lokale Bezeichnung der jeweiligen Komponente und/oder
einen Namen der verfahrenstechnischen Anlage, in welcher die jeweilige Komponente angeordnet ist, und/oder
eine Identifikation der verfahrenstechnischen Anlage, in welcher die jeweilige Komponente angeordnet ist, und/oder
ein Modell der verfahrenstechnischen Anlage, in welcher die jeweilige Komponente angeordnet ist, und/oder
einen Standort der verfahrenstechnischen Anlage, in welcher die jeweilige Komponente angeordnet ist, und/oder
eine globale und/oder lokale Bezeichnung der verfahrenstechnischen Anlage, in welcher die jeweilige Komponente angeordnet ist.

8. Verfahren nach einem der vorstehenden Ansprüche, wobei, um den Abarbeitungsplan (210) für einen speziellen Komponententyp herzustellen, in den mehreren verfahrenstechnischen Anlagen (101, 102, 103) jeweils spezielle Komponenten dieses speziellen Komponententyps ausgewählt und in dem Abarbeitungsplan (210) hinterlegt werden.

9. Verfahren nach einem der vorstehenden Ansprüche, wobei die mehreren verfahrenstechnischen Anlagen wenigstens eine Luftzerlegungsanlage (101, 102, 103) umfassen.

10. Verfahren nach einem der vorstehenden Ansprüche, wobei in der entfernten Recheneinheit jeweils ein Abarbeitungsplan (210) für die Komponententypen Motoren (110), Transformatoren (120), Schaltanlagen (130) hinterlegt sind.

11. Verfahren nach einem der vorstehenden Ansprüche, wobei in dem Abarbeitungsplan (210) für Motoren (110) Mittelspannungsmotoren und/oder Hauptluftkompressoren (111) und/oder Boosterluftkompressoren und/oder Recyclingluftkompressoren und/oder 02/N2-Kompressoren hinterlegt sind.

12. Verfahren nach einem der vorstehenden Ansprüche, wobei in dem Abarbeitungsplan (210) für Transformatoren (120) Mittelspannungstransformatoren und/oder Hochspannungstransformatoren und/oder Einspeisungstransformatoren und/oder Transformatoren vor Mittelspannungsmotoren und/oder MV/MV-Transformatoren und/oder MV/LV-Transformatoren hinterlegt sind.

13. Verfahren nach einem der vorstehenden Ansprüche, wobei in dem Abarbeitungsplan (210) für Schaltanlagen (130) Niederspannungsschaltanlagen und/oder Mittelspannungsschaltanlagen und/oder Hochspannungsschaltanlagen und/oder Einspeisungsschaltanlagen der hinterlegt sind.

14. Recheneinheit (150), die dazu eingerichtet ist, ein Verfahren nach einem der vorstehenden Ansprüche durchzuführen.

15. Computerprogramm, das eine Recheneinheit (150) veranlasst, ein Verfahren nach einem der Ansprüche 1 bis 13 durchzuführen, wenn es auf der Recheneinheit ausgeführt wird.

16. Maschinenlesbares Speichermedium mit einem darauf gespeicherten Computerprogramm nach Anspruch 15.
